(19) Europäisches Patentamt
European Patent Office
Office européen des brevets

(11) EP 1 992 927 B1

(12) EUROPÄISCHE PATENTSCHRIFT

(45) Veröffentlichungstag und Bekanntmachung des Hinweises auf die Patenterteilung:
27.04.2011 Patentblatt 2011/17

(51) Int Cl.:
*G01K 7/38* (2006.01)

(21) Anmeldenummer: 08001598.5

(22) Anmeldetag: 29.01.2008

(54) **Elektronisch kommutierter Asynchronmotor**

Electronically commutated induction motor

Moteur asynchrone commuté électroniquement

(84) Benannte Vertragsstaaten:
AT BE BG CH CY CZ DE DK EE ES FI FR GB GR HR HU IE IS IT LI LT LU LV MC MT NL NO PL PT RO SE SI SK TR

(30) Priorität: 14.05.2007 DE 102007024244
15.08.2007 DE 102007039366

(43) Veröffentlichungstag der Anmeldung:
19.11.2008 Patentblatt 2008/47

(73) Patentinhaber: ebm-papst St. Georgen GmbH & Co. KG
78112 St. Georgen (DE)

(72) Erfinder: Schmid, Harald, Dipl.-Ing.
78576 Emmingen (DE)

(74) Vertreter: Raible, Tobias
Raible & Raible
Schoderstrasse 10
70192 Stuttgart (DE)

(56) Entgegenhaltungen:
EP-A- 0 780 964          DE-A1- 19 539 711
GB-A- 2 261 518          JP-A- 10 174 276
JP-A- 2004 222 387       US-A- 3 848 466

**Beschreibung**

Die Erfindung betrifft einen elektronisch kommutierten Asynchronmotor mit einem Stator, einem Kurzschlussrotor, und einem Regler für die feldorientierte Regelung dieses Motors.

Die Erfassung der elektrischen Parameter von Asynchronmotoren (ASM) ist für die feldorientierte Regelung der produzierten Motoren bedeutsam.

Obwohl die feldorientierte Regelung (FOR) von Asynchronmotoren bekannt ist, stellt ihre Empfindlichkeit gegenüber Parameteränderungen ein Problem dar, das nur unbefriedigend gelöst ist. Bei der FOR erfolgt die Regelung in einem am Läuferfluss-Raumzeiger orientierten Koordinatensystem, wodurch eine getrennte Beeinflussung der flussbildenden und der drehmomentbildenden Stromkomponenten möglich ist. Die Bestimmung der momentanen Lage und des momentanen Betrags des Läuferfluss-Raumzeigers erfolgt meistens mit Hilfe eines Motormodells. Alle Schätzverfahren für den Läuferfluss, denen ein Modell zugrunde liegt, haben aber den Nachteil, dass das Parallelmodell nur dann den Motorzustand richtig wiedergeben kann, wenn die Modellparameter mit den aktuellen Motorparametern übereinstimmen.

Im Betrieb können sich der Statorwiderstand und der Rotorwiderstand abhängig von der Temperatur um bis zu 50 % ändern. Änderungen der Hauptinduktivität sind dann zu berücksichtigen, wenn der ASM auch im Feldschwächbereich betrieben wird.

Aus der japanischen Patent-Offenlegungsschrift JP 10 174276 A ist eine Motorschutzschaltung für einen Induktionsmotor bekannt, der über einen dreiphasigen Wechselrichter aus einem einphasigen Wechselstromnetz gespeist wird. Dieser Motor hat einen Hall-IC, der mit einem Sensormagneten zusammenwirkt, um die Drehzahl des Motors zu erfassen. Ferner hat er einen Thermistor, der auf einer Leiterplatte gegenüber der Statorwicklung angeordnet ist. Wenn die Drehzahl dieses Motors zu niedrig wird, wird er abgeschaltet, ebenso wenn die Wicklungstemperatur zu hoch wird. Die Abschaltung erfolgt über den Wechselrichter.

Aus der japanischen Patent-Offenlegungsschrift J P 2004 222387 A kennt man eine Motorschutzschaltung für einen Synchronmotor. Dieser hat einen genuteten Außenstator und einen Innenrotor mit acht Magnetplatten, die in Taschen eines Rotor-Blechpakets eingeschoben sind. An einem Ende jeder Magnetplatte befindet sich eine kleine Platte aus einem Weichferrit mit einer niedrigen Curietemperatur. Kommt die Temperatur des Rotors in die Nähe der Curietemperatur des Weichferrits, so nimmt dessen Sättigungs-Magnetflussdichte plötzlich stark ab. Diese Magnetflussdichte wird mittels eines stationären Hallsensors gemessen, und daraus wird die Rotortemperatur berechnet. Falls diese zu hoch wird, wird der Statorstrom reduziert, um eine Überlastung des Motors und eine Schädigung der Magnetplatten zu verhindern.

Aus der US 4 567 419 ist ein Aufzug bekannt, dessen Kabine über ein Trageseil von einem Induktionsmotor angetrieben wird. Zur Steuerung des Induktionsmotors ist eine frequenzorientierte Regelung vorgesehen. Diese benötigt für ihre Funktion die Temperatur des Kurzschlussläufers.

Hierzu ist am Kurzschlussläufer ein Thermoelement vorgesehen, und jedes Mal, wenn die Kabine anhält, wird über Stifte das Signal von diesem Thermoelement abgegriffen. Bei einer Variante wird bei einem Halt des Aufzugs ein Thermistor an die Wicklung des Kurzschlussläufers gepresst, um dessen Temperatur zu erfassen. Diese Temperatur wird dann in einen Widerstandswert für die FOR umgerechnet.

Aus der DE 3 205 460 A1 ist es bekannt, mittels eines Bariumferritmagnets eine Temperatur berührungslos zu erfassen. Dieser Magnet dient als Messwertaufnehmer, und das von ihm erzeugte Magnetfeld wird mit einem Hallgenerator KSY 10 der Firma Siemens gemessen und mittels einer Eichkurve in eine Temperatur umgerechnet.

Aus der JP 2005 061709 A kennt man einen Kühlschrank mit mehreren Tiefkühlfächern. Zum Antrieb dient ein Induktionsmotor mit FOR. Hierbei wird die Temperatur in einem zu kühlenden Raum gesteuert, ohne einen Temperatursensor zu verwenden.

Es ist deshalb eine Aufgabe der Erfindung, einen neuen elektronisch kommutierten Asynchronmotor bereit zu stellen, welcher sich besonders für die feldorientierte Regelung eignet.

Nach der Erfindung wird diese Aufgabe gelöst durch den Gegenstand des Anspruchs 1. Es gelingt so in sehr einfacher Weise, die Temperatur des Rotors berührungslos zu messen. Diese Messung beruht darauf, dass der Sensormagnet in wärmeleitender Verbindung mit dem Kurzschlussläufer angeordnet ist, so dass die von diesem Sensormagnet erzeugte Magnetflussdichte eine direkte Funktion der Temperatur des Kurzschlussläufers ist. Dabei dient der Sensor gleichzeitig auch zur Erfassung der Drehstellung des Kurzschlussläufers, so dass sich eine sehr kompakte, raumsparende Bauweise ergibt.

Eine bevorzugte Weiterbildung ist Gegenstand des Anspruchs 15. Die Verwendung eines magnetoresistiven Sensors ermöglicht in sehr einfacher Weise eine gleichzeitige Messung von Temperatur und Drehstellung und spart daher Kosten und ermöglicht eine sehr kompakte Bauweise eines solchen Motors.

Da sich bei der Produktion die einzelnen Motoren voneinander unterscheiden, geht man mit besonderem Vorteil gemäß Anspruch 22 vor, d. h. bei der Produktion werden motorspezifische Daten in einem permanenten Speicher eingespeichert, und diese Messung und Speicherung erfolgt bei einer standardisierten Temperatur des Motors, gewöhnlich bei 20 °C. Mit Hilfe dieser eingespeicherten Daten kann man dann die Temperatur, welche am galvanomagnetischen Sensor erfasst wird, zuverlässig berechnen und bekommt ein Motormodell, das eine genaue feldorientierte Regelung ermöglicht.

Weitere Einzelheiten und vorteilhafte Weiterbildungen der Erfindung ergeben sich aus den im folgenden beschriebenen und in der Zeichnung dargestellten, in keiner Weise als Einschränkung der Erfindung zu verstehenden Ausführungsbeispielen, sowie aus den übrigen Unteransprüchen. Es zeigt:

Fig. 1     einen Getriebemotor 200, der mit feldorientierter Regelung (FOR) arbeitet,

Fig. 2     eine Prinzipdarstellung einer FOR,

Fig. 3     eine Prinzipdarstellung zur Erläuterung der Erfindung,

Fig. 4     eine Prinzipdarstellung der Messung einer Motortemperatur mittels eines galvanomagnetischen Sensors,

Fig. 5     eine Ausgangsspannungs-magnetische Flussdichte-Kennlinie eines galvanomagnetischen Sensors,

Fig. 6     zeigt eine Ausgangsspannung/Temperatur-Kennlinie des galvanomagnetischen Sensors der Fig. 5,

Fig. 7     eine Prinzipdarstellung der Messung der Motortemperatur mittels eines MR-Sensors 18', und

Fig. 8     eine Prinzipdarstellung einer Auswertevorrichtung für das temperaturabhängige Signal eines Sensors.

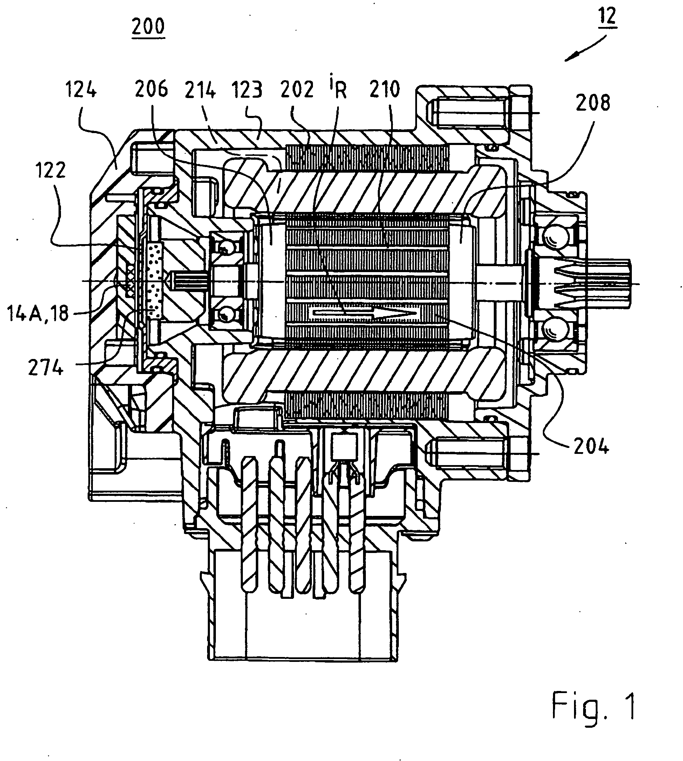

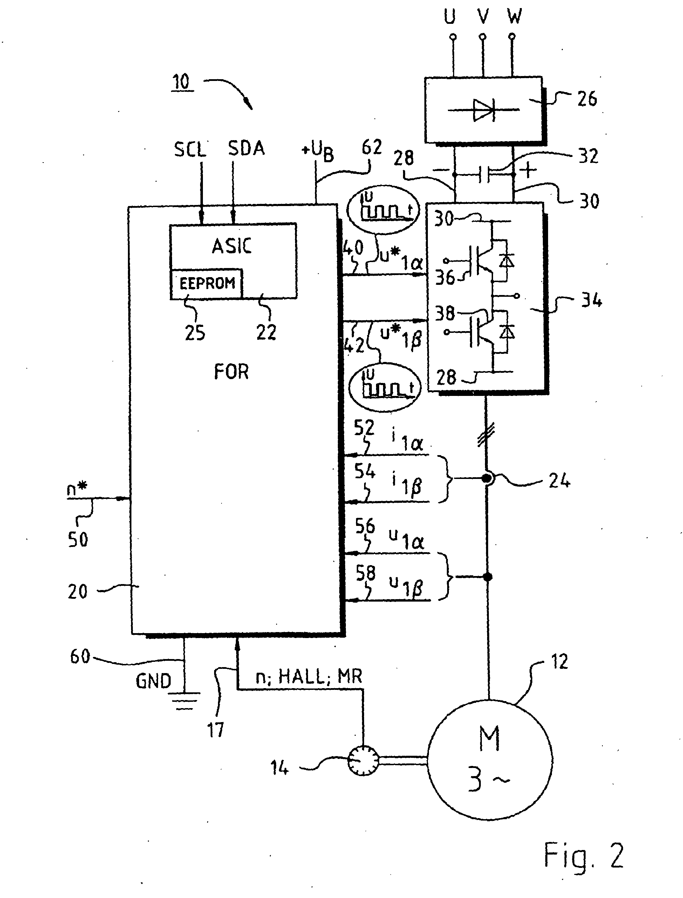

**Fig. 1** zeigt den grundsätzlichen Aufbau eines Getriebemotors 200, der einen dreiphasigen ASM 12 enthält. Dieser Motor hat ein Motorgehäuse 123, einen Stator 202 mit einer dreiphasigen Wicklung, einen Rotor 204, der als sog. Kurzschlussläufer ausgebildet ist, und eine Sensoranordnung 14A, 18, die bevorzugt auf einer Leiterplatte sitzt und auf der Außenseite von einem Sensorgehäuse 124 umgeben ist. Der Rotor 204 hat am linken Ende einen Kurschlussring 206, und am rechten Ende einen Kurzschlussring 208. Die Ringe 206, 208 sind in der üblichen Weise durch Kurzschlussstäbe 210 zu einem Käfig verbunden, in dem im Betrieb ein Rotorstrom $i_R$ fließt, dessen Größe abhängig von der Temperatur des Rotors 204 ist, da der Widerstand der Stäbe 210 mit zunehmender Temperatur zunimmt. Aus diesem Grund muss die Höhe des Stroms abhängig von der Rotortemperatur angepasst werden, und aus diesem Grund wird bisher in die Statorwicklung ein Temperatursensor integriert, dessen Position mit dem Bezugszeichen 214 angedeutet ist, und der die Temperatur des Rotors 204 indirekt erfasst. Das Signal von diesem Sensor 214 wird einem Regler 20 für die feldorientierte Regelung (FOR) zugeführt, der in Fig. 2 dargestellt ist.

**Fig. 2** zeigt eine Regelanordnung 10 für den ASM 12. Dieser hat eine Geberanordnung 14 zum Erzeugen eines Drehzahlsignals n, ferner eine Geberanordnung 14A (Fig. 1) zum Erzeugen eines Hallsignals HALL und eines Signals MR von einem magnetoresistiven Widerstand 18 (Fig. 2). Zur Geberanordnung 14 gehört ein Sensormagnet 274.

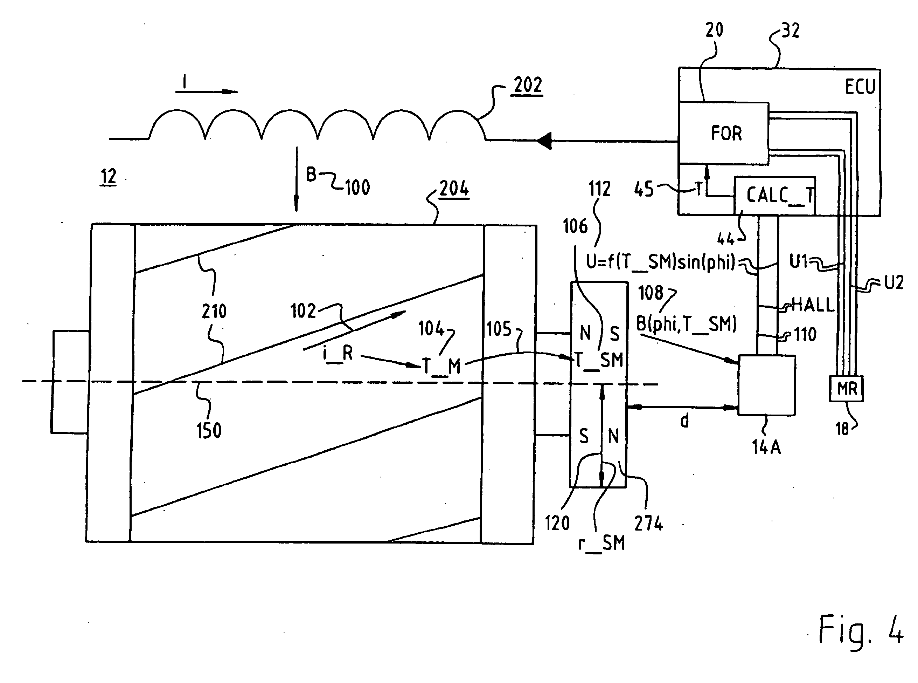

Die diversen Signale n, HALL, MR werden einem zugeordneten mehrpoligen Eingang 17 (Fig. 2) eines feldorientierten Reglers (FOR) 20 bekannter Bauart zugeführt. Dieser enthält einen speziellen ASIC 22, der das Signal MR verarbeitet, um daraus die augenblickliche Drehstellung des Motors 12 zu berechnen. Ferner verarbeitet der ASIC das Signal HALL, um daraus die augenblickliche Temperatur des Rotors 204 zu berechnen. Das Signal HALL könnte auch direkt nach außen zur ECU 33 (Fig. 4) geführt werden, und dort würde dann die Temperaturberechnung erfolgen.

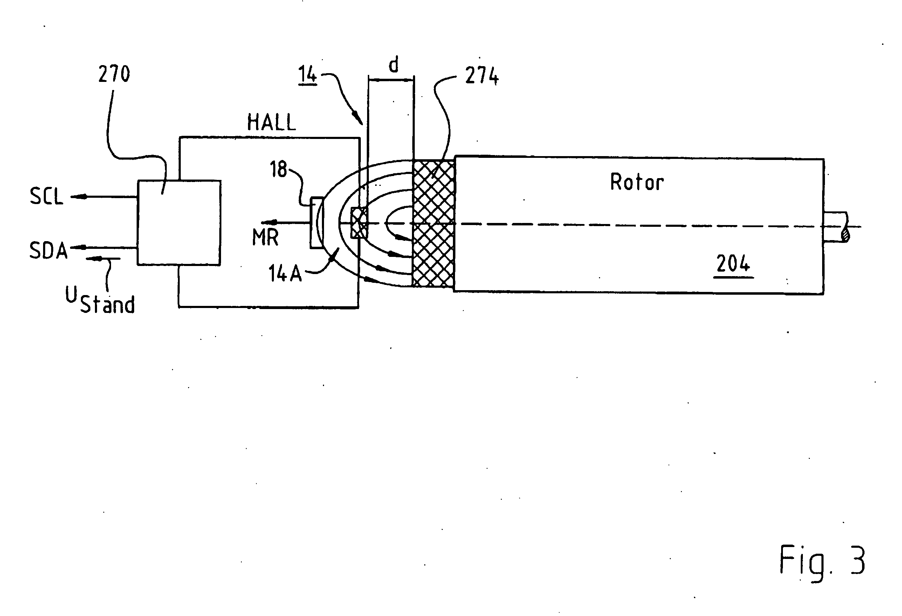

Hierzu wird gemäß **Fig. 3** bei einer vorgegebenen Temperatur, z. B. 20° C, das Signal HALL einer Messanordnung 270 zugeführt. Diese erzeugt daraus ein Signal uStand, das zwei Eingängen SCL und SDA des ASIC 22 als Motordatenwert zugeführt und dort in einem EEPROM 25 oder einem anderen, bevorzugt nichtflüchtigen Speicher gespeichert wird. Dieses Signal ist abhängig von dem Abstand d (Fig. 3) zwischen dem Hallsensor 14A und dem Sensormagneten 274, der an einer Stirnseite des Rotors 204 oder in Wärme leitender Verbindung mit diesem angeordnet ist und folglich dessen Temperatur hat. Deshalb gibt der Wert uStand den genormten Wert des Hallsignals HALL für den verwendeten Sensormagneten 274 bei einer Temperatur von 20° C und dem Abstand d an, der bei einer Serie von Motoren stets kleinen Schwankungen unterliegt. Diese Schwankungen werden durch den Abgleichvorgang weitgehend eliminiert. Anstelle von Motordaten kann man auch von Motorsystemdaten sprechen, um zu verdeutlichen, dass es sich um Daten handelt, die den Motor und den Sensor betreffen.

Der Sensormagnet 274 steuert auch den Magnetoresistor 18, der zur exakten Erfassung der Rotorstellung dient. Die Rotorstellung kann aber auch direkt aus dem Hall-Signal HALL berechnet werden.

Dem FOR 20 wird auch an einem Eingang 50 ein Wert n* für die gewünschte Drehzahl des Motors 10 zugeführt. Ferner werden ihm an Eingängen 52, 54 Werte i1, i2, i3 für die Phasenströme und an Eingängen 56, 58 Werte u1, u2, u3 für die Phasenspannungen der jeweiligen Phasen des Motors 12 zugeführt. Die Ströme i1 etc. werden z. B. mittels Stromwandlern 24 bekannter Bauart gemessen, von denen nur einer dargestellt ist, da Fig. 1 eine übliche symbolische Darstellung für einen solchen Motor ist.

Der Motor 12 wird bei diesem Beispiel über einen Gleichrichter 26 aus einem Drehstromnetz U, V, W mit elektrischer Energie versorgt. Der Gleichrichter 26 speist einen Gleichstrom-Zwischenkreis 28 (minus) und 30 (plus), an den als Blindstromquelle ein Kondensator 32 angeschlossen ist. Naturgemäß könnte der Gleichstrom-Zwischenkreis 28, 30 in der gleichen Weise direkt an eine Batterie angeschlossen werden, z. B. an die Batterie eines Fahrzeugs, wie das dem Fachmann geläufig ist.

An den Gleichstrom-Zwischenkreis 28, 30 ist ein Dreiphasen-Wechselrichter 34 angeschlossen, von dem nur einer der drei Zweige dargestellt ist. Dieser enthält Leistungs-MOSFETs 36, 38, die über zugeordnete Ausgänge 40, 42 des FOR 20 mittels PWM-Impulsen gesteuert werden, welche in Fig. 2 symbolisch angedeutet sind.

Da der ASIC 22 vom Hallsensor 14A (Fig. 3) das Signal HALL erhält, welches von der Temperatur abhängig ist, und da im EEPROM 25 ein Basiswert gespeichert ist, der einer Temperatur von 20° C entspricht, kann der ASIC 22 die augenblickliche Temperatur ständig neu berechnen und ausgehend hiervon die Ströme im Motor 12 so steuern, dass sich das gewünschte Drehmoment bzw. die gewünschte Drehzahl ergibt. Dabei wird in Fig. 3 vom gleichen Sensormagneten 274 auch der Magnetoresistor 18 gesteuert, so dass man auf diese Weise mit nur einem Sensormagneten 274 sowohl die augenblickliche Drehwinkelstellung des Rotors 204 wie auch die augenblickliche Rotortemperatur berechnen kann, was eine sehr kompakte Bauweise ergibt.

**Fig. 4** zeigt eine schematische Darstellung des Stators 202, des Rotors 204 mit den Kurzschlussstäben 210 und mit dem Sensormagneten 274, des galvanomagnetischen Sensors 14A, des MR-Sensors 18 zur Erfassung des Rotorstellungswinkels phi, und der ECU 33, welche einen FOR 20 und eine Temperaturauswertevorrichtung 44 hat.

Der Stator 202 erzeugt eine magnetische Flussdichte B 100, durch welche ein Strom $i_R$ 102 im Kurzschlussrotor 204 induziert wird. Ferner wird hierdurch ein Drehmoment am Rotor 204 erzeugt, wodurch dieser sich dreht und den Rotorstellungswinkel phi ändert. Durch den Strom $i_R$ 102 tritt, insbesondere durch den Widerstand der Kurzschlussstäbe 210, eine Verlustleistung auf, welche die Temperatur T_M 104 des Rotors 204, bzw. allgemein des Motors 12, erhöht.

Die Temperatur T_M 104 beeinflusst durch Wärmeübertragung 105, insbesondere durch Wärmeleitung, die Temperatur T_SM 106 des Sensormagneten 274, so dass

$$T\_SM \approx T\_M \qquad\qquad\qquad ...(1)$$

ist. Hierzu ist der Sensormagnet 274 z. B. über einen wärmeleitenden Werkstoff mit dem Rotor 204 drehfest verbunden.

Der Sensormagnet 274 dreht sich mit dem Rotor 204 und erzeugt eine magnetische Flussdichte B(phi, T_SM) 108, die abhängig von dem Rotorstellungswinkel phi und der Temperatur T_SM 106 des Sensormagneten 274 ist, wobei die Amplitude der magnetischen Flussdichte B 108 mit steigender Temperatur T_SM 106 des Sensormagneten 274 abnimmt.

Durch den galvanomagnetischen Sensor 14A wird die magnetische Flussdichte B 108 am Ort des Sensors 14A detektiert und ein Ausgangssignal HALL 110 erzeugt, dessen Spannung U 112 im Wesentlichen die Form

$$U = f(T\_SM) * sin(phi) \qquad\qquad\qquad ...(2)$$

hat.

Die ermittelte Spannung U112 wird der Temperaturauswertevorrichtung CALC_T 44 zugeführt. Durch Auswerten der Amplitude f(T_SM) kann nun die Temperatur T_SM 106 des Sensormagneten 274 bestimmt werden, die in guter Näherung der Temperatur T_M 104 des Kurzschlussrotors 204 entspricht. Der ermittelte Temperaturwert T 45 wird anschließend dem FOR 20 zugeführt, und dieser kann mit Hilfe des Werts T 45 und des vom MR-Sensor 18 ermittelten Rotorstellungswinkels phi eine verbesserte feldorientierte Regelung durchführen. Die Messung der temperaturabhängigen magnetischen Flussdichte 108 mittels eines galvanomagnetischen Sensors 14A reagiert schneller auf Temperaturänderungen im Motor 12 als die Messung der Temperatur am Ort des Sensors 14A (beispielsweise durch einen NTC-Widerstand), da die Wärmeübertragung nicht augenblicklich erfolgt, und da deshalb eine Temperaturmessung am Ort des Sensors 14A gegenüber der Temperatur des Motors zeitlich verzögert ist.

Der Abstand d (Fig. 3) zwischen dem Sensormagneten 274 und dem galvanomagnetischen Sensor 14A wird bevorzugt derart gewählt, dass er bei ca. 2/3 des Radius r_SM 120 des Sensormagneten 274 liegt. Bei einem bevorzugten Sensormagneten 274 beträgt r_SM ca. 7 mm, und d somit ca. 5 mm.

Sofern eine statorseitige Trennwand bzw. Kappe 122 (Fig. 1) zwischen dem Sensor 14A und dem Sensormagneten 274 vorgesehen ist, z. B. zum Schutz des Sensors 14A vor motorinternen Medien wie z. B. Öl, wird die Kappe 122 bevorzugt aus einem schlecht wärmeleitenden Material wie z. B. Kunststoff ausgebildet, um eine Erwärmung des Sensors 14A zu verringern. Zusätzlich bzw. alternativ kann der Sensor 14A gut Wärme leitend mit dem Sensorgehäuse 124 (Fig. 1) thermisch verbunden werden, um die Temperatur des Sensors 14A etwa auf Außentemperatur zu halten. Hierdurch wird bei galvanomagnetischen Sensoren 14A mit von der Temperatur des Sensors 14A abhängigem Ausgangssignal 110 eine Beeinflussung des Ausgangssignals 110 durch eine Erwärmung des Sensors 14A verringert, was die Auswertung erleichtert.

Bevorzugt werden galvanomagnetische Sensoren 14A mit Kompensation der Abhängigkeit von der Sensortemperatur verwendet. Eine solche Kompensation ist z. B. im Silizium des Sensors 14A möglich.

Ein geeigneter galvanomagnetischer Sensor 14A ist z.B. der Hall-Sensor HW-1 01 A der Fa. ASAHI KASEI EMD CORPORATION (AKE).

Es ist auch eine Lösung ohne einen MR-Sensor 18 oder 18' möglich. Hierzu werden zwei analog arbeitende galvanomagnetische Sensoren 14A verwendet, um zwei nicht identische Sinus-Signale, bevorzugt ein Sinus-Signal und ein Cosinus-Signal, zu erzeugen. Die Temperatur kann dann entweder aus einem oder aus beiden Signalen ermittelt werden.

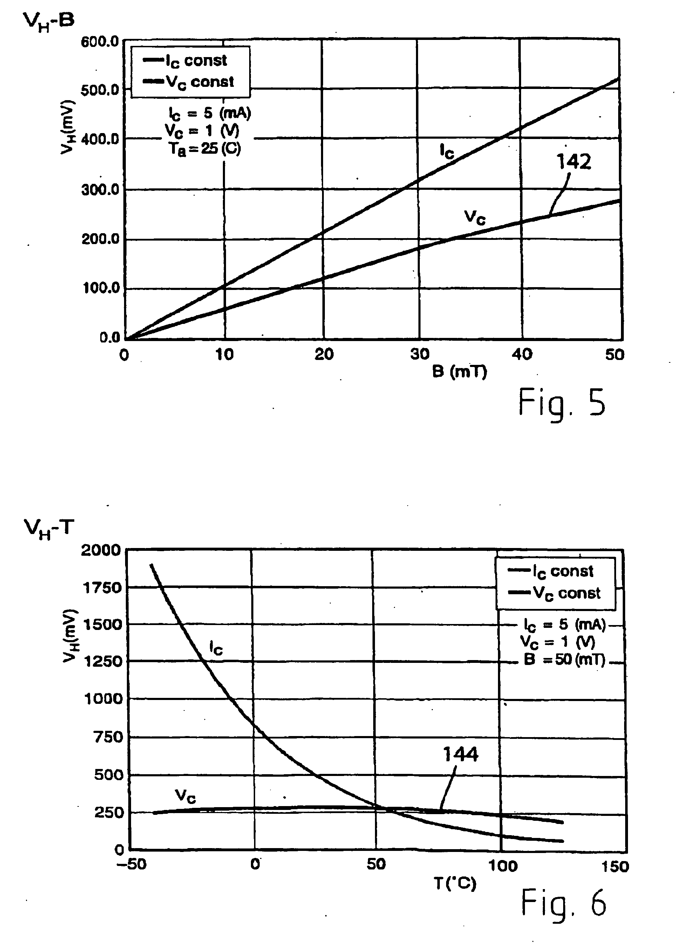

**Fig. 5** zeigt aus dem Datenblatt des Hall-Sensors HW-101A eine Kennlinie $V_H$-B mit der Ausgangsspannung $V_H$ und der magnetischen Flussdichte B, und **Fig. 6** eine Kennlinie $V_H$-T mit der Ausgangsspannung $V_H$ und der Temperatur T. Wie aus der Kurve 142 aus Fig. 5 zu sehen ist, steigt die Ausgangsspannung $V_H$ linear mit dem Betrag der magnetischen Flussdichte B an, sofern die Eingangsspannung Vc konstant gehalten wird. Aus der Kurve 144 in Fig. 6 ist ersichtlich, dass die Höhe der Ausgangsspannung $V_H$ im Betriebsbereich- -40° C bis +110° C der Temperatur bei konstanter Eingangsspannung $V_C$ im Wesentlichen konstant bleibt.

Die vom Hall-Sensor 14A erzeugte Spannung U 112 (Fig. 4) hängt somit im Wesentlichen von der - richtungsunabhängigen - magnetischen Flussdichte B ab.

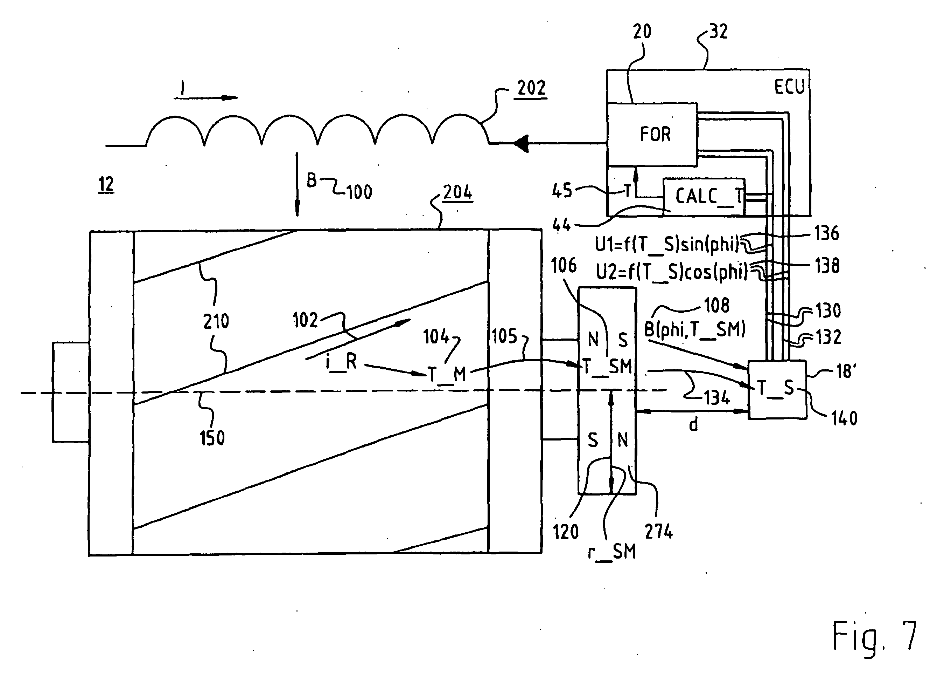

**Fig. 7** zeigt eine Prinzipdarstellung einer Messung der Motortemperatur T_M 104 mittels eines bezüglich der Rotorachse 150 zentral angeordneten MR-Sensors 18'.

Die die Erwärmung des Motors 12 betreffenden Mechanismen im Stator 202 und Rotor 204 entsprechen denen aus Fig. 4 und werden nicht noch einmal beschrieben.

Ausgangspunkt ist wieder, dass die Temperatur T_SM des Sensormagneten 274 ein ausreichendes Abbild der Temperatur T_M 104 des Kurzschlussrotors 204 darstellt.

Anders als bei Fig. 4 wird hier der MR-Sensor 18' (z. B. ein AMR-, GMR- oder CMR-Sensor) derart relativ zum Sensormagneten 274 positioniert, dass eine Wärmeübertragung 134 vom Sensormagneten 274 auf den Sensor 18' stattfindet, insbesondere durch Wärmestrahlung und Konvektion.

Bei Verwendung eines MR-Sensors 18' mit Ausgängen 130, 132 hängen die Ausgangssignale 136, 138

$$U1 = f(T\_S) \sin(phi) \qquad \qquad ...(3)$$

$$U2 = f(T\_S) \cos(phi) \qquad \qquad ...(4)$$

ab vom Rotorstellungswinkel phi und der Temperatur T_S 140 des Sensors 18', und sie werden der ECU 33 zugeführt, in der z.B. die Ausgangsspannung U1 zur Ermittlung der Temperatur T der Temperaturauswertevorrichtung CALC_T zugeführt wird, und die Ausgangsspannungen U1 und U2 dem FOR 20 zur Ermittlung des Rotorstellungswinkels phi zugeführt werden.

Bevorzugt werden MR-Sensoren 18' verwendet, deren Ausgangssignale 130, 132 im spezifizierten Bereich nur wenig von der Stärke der magnetischen Flussdichte B 108 abhängen, sondern hauptsächlich von deren Richtung (auch Magnetfeldrichtung genannt), bzw. bei denen die Abhängigkeit von der magnetischen Flussdichte B zumindest geringer ist als die von der Temperatur des MR-Sensors 18'.

Zum Beispiel sinkt bei steigender Temperatur T_S beim MR-Sensor KMZ43T der Firma PHILIPS die Ausgangsspannung um ca. 0,29 %/K, und sie ist im Arbeitsbereich (üblicherweise im Sättigungsbereich bezüglich der magnetischen Flussdichte B) im Wesentlichen unabhängig von dem Betrag der magnetischen Flussdichte B. Der Arbeitsbereich bezüglich der Temperatur beträgt -40° C bis +125° C (K = Kelvin).

Durch Auswertung der Amplitude f(T_S) kann in CALC_T 44 die Temperatur (T_S) 140 des Sensors 18' bestimmt werden, die ungefähr der Temperatur T_SM 106 des Sensormagneten 274 entspricht, welche wiederum in guter Näherung der Temperatur (T_M) 104 des Kurzschlussrotors 204 entspricht.

Durch die zweifach indirekte Messung ist das Verfahren besonders bei sich schnell ändernden Temperaturen nicht so genau wie z. B. eine direkte Messung im Kurzschlussrotor 204 oder eine Messung mit einem galvanomagnetischen Sensor wie in Fig. 4, jedoch immer noch genau genug für viele Anwendungen. Die Lösung ist deshalb sehr günstig, weil mit dem MR-Sensor 140 sowohl der Rotorstellungswinkel phi als auch die ungefähre Temperatur (T_M) 104 des Kurzschlussrotors 204 ermittelt werden können.

Der Abstand d zwischen dem Sensormagneten 274 und dem MR-Sensor 18' wird bevorzugt klein gewählt, z. B. 1 mm bis 4 mm, weiter bevorzugt 1,5 mm bis 3 mm, um eine gute Wärmeübertragung 134 zu ermöglichen.

Wie bei der Variante mit dem galvanomagnetischen Sensor 14A kann auch hier eine statorseitige Trennwand bzw. Kappe 122 (Fig. 1) zwischen dem Sensor 18' und dem Sensormagneten 274 vorgesehen werden, um den Sensor 18' zu schützen.

Für eine gute Wärmeübertragung 134 wird die Trennwand 122 aus einem gut wärmeleitenden Material wie z. B. einem Metall, insbesondere Aluminium, gefertigt.

Zusätzlich kann der Sensor 18 bzw. 18' gegenüber dem üblicherweise gut wärmeleitenden Sensorgehäuse 124 (Fig. 1) thermisch isoliert werden, um eine Kühlung durch dieses zu verringern.

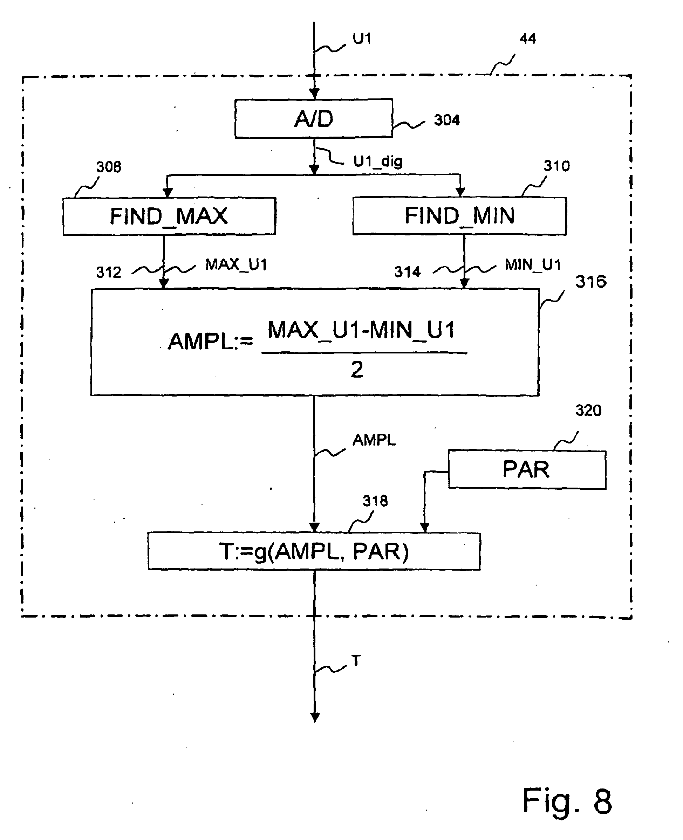

**Fig. 8** zeigt ein Ausführungsbeispiel für eine Temperaturauswertevorrichtung (Temperaturermittlungsvorrichtung, Temperaturerfassungsvorrichtung) 44 zur Auswertung eines temperaturabhängigen Sensorsignals U1 von einem galvanomagnetischen Sensor 14A (Fig. 4) oder einem MR-Sensor 18' (Fig. 7).

Die Vorrichtung 44 ist hier als ASIC ausgebildet, kann jedoch z. B. auch in einem Mikroprozessor oder Mikrocontroller ausgebildet werden.

Das temperaturabhängige Signal U1 wird einem A/D-Wandler 304 zugeführt und dort digitalisiert. Das Ausgangssignal U1_dig wird einer Funktion FIND_MAX 308 und einer Funktion FIND_MIN 310 zugeführt, die z.B. über eine vorgegebene Zeitspanne den Maximalwert MAX_U1 312 und den Minimalwert MIN_U1 314 ermitteln. Hierzu wird z. B. während einer Periode des sinusförmigen Signals U1 der größte Wert und der kleinste Wert ermittelt. Anschließend wird bei 316 die Amplitude AMPL berechnet, indem die Hälfte der Differenz zwischen dem maximalen Wert MAX_U1 und dem minimalen Wert MIN_U1 berechnet wird.

Bei 318 wird anschließend die Temperatur T aus der Amplitude AMPL und ggf. weiteren vom Motor bzw. Sensor abhängigen Parametern PAR durch eine Funktion g(AMPL, PAR) ermittelt. Die motorabhängigen Parameter PAR sind z. B. in einem EEPROM 320 (Fig. 8) gespeichert. Die Ermittlung der Temperatur kann z. B. abhängig sein vom Messverfahren, vom Sensortyp, von der Sensoranordnung, von Serienschwankungen bei der Sensorherstellung etc. Bei Anwendungen mit geringen Anforderungen an die Genauigkeit bzw. geringen Toleranzen können die Parameter PAR 320 für den Motortyp fest vorgegeben werden, bei einer höheren Anforderung an die Genauigkeit bzw. großen Toleranzen kann jedoch auch zumindest teilweise eine für jeden individuellen Rotor 204 ermittelte Angabe der Parameter notwendig sein, wobei z. B. Messungen bei vorgegebenen Temperaturen durchgeführt werden.

Sofern zwei Rotorstellungssignale vorhanden sind, wie dies z.B. bei der Verwendung eines MR-Sensors oder von zwei galvanomagnetischen Sensoren der Fall ist, kann die Temperatur entweder nur aus einem der beiden Signale ermittelt werden, oder aus beiden. Bei einer Detektion eines Sinus- und eines Cosinus-Signals können diese in bekannter Weise als Kreis aufgetragen werden, und die Temperatur ergibt sich aus dessen Radius.

Die vorliegende Art der Temperaturmessung kann auch bei BLDC-Motoren (bürstenlose Gleichstrommotoren bzw. elektronisch kommutierte Gleichstrommotoren) verwendet werden, um dort eine Regelung mit einem genaueren Motormodell zu ermöglichen.

Es können auch Sensoren 14A bzw. 18, 18' verwendet werden, die u.a. sowohl von dem Betrag der magnetischen Flussdichte B als auch von der Temperatur T_S des Sensors 18, 18' abhängig sind. Dies kann jedoch die Auswertung erschweren, und die Effekte können sich gegenseitig aufheben bzw. negativ beeinflussen. Ggf. muss bei der Verwendung eines solchen Sensors die Kennlinie der ermittelten Spannung über der Motortemperatur vorab im Motor 12 gemessen werden.

Bei der Verwendung von mindestens zwei Sensoren ist es vorteilhaft, beide auf einer gemeinsamen Leiterplatte anzuordnen. Bei zwei galvanomagnetischen Sensoren werden beide bevorzugt auf derselben Seite der Leiterplatte angeordnet, bei einem galvanomagnetischen und einem MR-Sensor werden bevorzugt entweder beide Sensoren auf derselben Seite der Leiterplatte angeordnet, oder einer der Sensoren wird auf der Vorderseite der Leiterplatte und der andere auf deren Rückseite angeordnet. MR-Sensoren werden bevorzugt im Bereich der Drehachse 150 (Fig. 4, Fig. 7) des Rotors bzw. des Sensormagneten 106 und damit zentral angeordnet, während galvanomagnetische Sensoren besonders bei der ausschließlichen Verwendung zur Temperaturermittlung relativ frei positioniert werden können, solange die magnetische Flussdichte an der gewählten Position noch groß genug ist.

Naturgemäß sind im Rahmen der Erfindung vielfache Abwandlungen und Modifikationen möglich.

## Patentansprüche

**1.** Elektronisch kommutierter Motor (12), welcher aufweist:

Einen Stator (202);
einen Kurzschlussrotor (204);
einen Regler (20) für die feldorientierte Regelung dieses Motors (12);

einen Sensormagneten (274), welcher in wärmeleitender Verbindung mit dem Kurzschlussrotor (204) angeordnet ist;

einen in einem vorgegebenen Abstand (d) von diesem Sensormagneten (274) am Stator (202) angeordneten Sensor (14A; 18), dessen Ausgangssignal (HALL) eine Funktion der vom Sensormagneten (274) am Sensor (14A; 18) erzeugten Magnetflussdichte (B) und damit der Temperatur des Kurzschlussrotors (204) ist;

eine Temperaturauswertevorrichtung (CALC_T 44), welche dazu ausgebildet ist, im Betrieb einen Temperaturwert (T) aus dem Ausgangssignal des Sensors (14A; 18) zu ermitteln, welcher Temperaturwert dazu dient, eine Temperatur (T_SM, T_S) im Motor (12) zu charakterisieren, die einen aktuellen Parameter für die feldorientierte Regelung darstellt;

und der Regler (20) dazu ausgebildet ist, aus dem Ausgangssignal (HALL, U, U1, U2) des Sensors (14A; 18) auch die Drehstellung des Kurzschlussrotors (204) zu ermitteln.

2. Motor nach Anspruch 1, bei welchem der Sensor (13A; 18) im Bereich einer Stirnseite des Kurschlussrotors (204) angeordnet ist.

3. Motor nach Anspruch 1 oder 2, bei welchem der Temperaturwert (T) geeignet ist, die Temperatur des Kurzschlussrotors (204) zu charakterisieren.

4. Motor nach einem der vorhergehenden Ansprüche, bei welchem die Temperaturauswertevorrichtung (CALC_T 44) dazu ausgebildet ist, den Temperaturwert (T) dem Regler (20) für die feldorientierte Regelung zuzuführen.

5. Motor nach einem der vorhergehenden Ansprüche, welchem ein Datenspeicher (25, 320) zugeordnet ist, in dem Motorsystemdaten gespeichert sind, die am ASM (12) bei Betrieb mit einer vorgegebenen Temperatur gemessen worden sind.

6. Motor nach Anspruch 5, bei welchem die Temperaturauswertevorrichtung (CAC_T 44) dazu ausgebildet ist, einen die Temperatur (T_SM, T_S) im Motor (12) charakterisierenden Wert (T) in Abhängigkeit von dem Ausgangssignal des Sensors (14A; 18; 18') und den gespeicherten Motorsystemdaten zu generieren.

7. Motor nach einem der vorhergehenden Ansprüche, bei welchem die Temperaturauswertevorrichtung (CALC_T 44) dazu ausgebildet ist, den Temperaturwert (T) aus der Amplitude des Ausgangssignals (HALL, U, U1, U2) des Sensors (14A; 18) zu ermitteln.

8. Motor nach einem der vorhergehenden Ansprüche, bei welchem zwischen dem Sensormagneten (274) und dem Sensor (14A; 18) ein Trennglied (122) vorgesehen ist.

9. Motor nach einem der vorhergehenden Ansprüche, bei welchem der Sensor (14A) ein galvanomagnetischer Sensor ist.

10. Motor nach einem der vorhergehenden Ansprüche, bei welchem der Sensor (14A) ein Hall-Sensor ist.

11. Motor nach einem der vorhergehenden Ansprüche, bei welchem der galvanomagnetische Sensor (14A) dazu ausgebildet ist, ein Ausgangssignal (110) zu erzeugen, welches vom Betrag der durch den Sensormagneten (274) erzeugten magnetischen Flussdichte (B 108) abhängt.

12. Motor nach Anspruch 11, bei welchem die Amplitude des Ausgangssignals (110) vom Betrag der durch den Sensormagneten (274) erzeugten magnetischen Flussdichte (B 108) abhängt.

13. Motor nach einem der vorhergehenden Ansprüche, bei welchem der galvanomagnetische Sensor (14A) dazu ausgebildet ist, ein von der Temperatur (T_SM) des Sensormagneten (274) abhängiges Ausgangssignal (HALL, U) zu ermitteln.

14. Motor nach einem der vorhergehenden Ansprüche, bei welchem zwischen dem Sensormagneten (274) und dem Sensor (14A; 18) ein Trennglied (122) aus Kunststoff vorgesehen ist.

15. Motor nach einem der Ansprüche 1 bis 8, bei welchem der Sensor (18, 18') ein MR-Sensor ist.

16. Motor nach einem der Ansprüche 1 bis 8 oder 15, bei welchem der Sensor (18, 18') dazu ausgebildet ist, ein Ausgangssignal (U1, U2) zu erzeugen, welches von der Richtung der durch den Sensormagneten (274) erzeugten magnetischen Flussdichte (B(phi)) abhängt.

17. Motor nach Anspruch 15 oder 16, bei welchem der Sensor (18, 18') dazu ausgebildet ist, ein Ausgangssignal (U1, U2) zu erzeugen, dessen Amplitude von der Richtung der durch den Sensormagneten (274) erzeugten magnetischen Flussdichte (B(phi)) abhängt.

18. Motor nach einem der Ansprüche 15 bis 17, bei welchem der Sensor (18, 18') dazu ausgebildet ist, ein von der Temperatur des Rotorstellungssensors (18, 18') abhängiges Ausgangssignal (U1, U2) zu erzeugen.

19. Motor nach einem der Ansprüche 15 bis 18, bei welchem zwischen dem Sensormagneten (274) und dem Sensor (18, 18') ein Trennglied (122) vorgesehen ist, welches eine gute Wärmeübertragung zwischen dem Sensormagneten (274) und dem Sensor (18, 18') ermöglicht.

20. Motor nach einem der Ansprüche 15 bis 19, bei welchem der Sensor (14A) wärmeisoliert mit dem Sensorgehäuse (124) des Motors verbunden ist.

21. Motor nach einem der vorhergehenden Ansprüche, mit einer Temperaturauswertevorrichtung, welche dazu ausgebildet ist, aus dem Ausgangssignal des Sensors (14A) einen die Temperatur des Kurzschlussrotors (204) charakterisierenden Wert zu generieren und diesen dem Regler (FOR 20) für die feldorientierte Regelung zuzuführen.

22. Motor nach Anspruch 21, welchem ein Datenspeicher (25) zugeordnet ist, in welchem Motordaten gespeichert sind, die am ASM (12) bei Betrieb mit einer vorgegebenen Temperatur gemessen worden sind,
und bei welchem die Temperaturauswertevorrichtung (20) dazu ausgebildet ist, den die Temperatur des Kurzschlussrotors (204) charakterisierenden Wert in Abhängigkeit vom Ausgangssignal des Sensors (14A) und den gespeicherten Motordaten zu generieren.

23. Motor nach einem der vorhergehenden Ansprüche, bei welchem dem Sensormagneten (274) auch ein Magnetoresistor (18, 18') zugeordnet ist, dessen Ausgangssignal (MR) dazu dient, eine Information über die Drehstellung (phi) des Kurzschlussrotors (204) zu liefern.

**Claims**

1. Electronically commutated motor (12), having:

   a stator (202);
   a short-circuit rotor (204);
   a regulator (20) for field-oriented regulation of this motor (12);
   a sensor magnet (274), which is arranged in heat-conducting connection to the short-circuit rotor (204);
   a sensor (14A; 18), which is arranged on the stator (202) at a specified distance (d) from this sensor magnet (274), and the output signal (HALL) of which is a function of the magnetic flux density (B) which the sensor magnet (274) generates on the sensor (14A; 18), and thus of the temperature of the short-circuit rotor (204);
   a temperature evaluating device (CALC_T 44), which is designed to determine, in operation, a temperature value (T) from the output signal of the sensor (14A; 18), said temperature value being used to characterize a temperature (T_SM, T_S), representing a current parameter for the field-oriented regulation, in the motor (12);
   and the regulator (20) being designed to determine, from the output signal (HALL, U, U1, U2) of the sensor (14A; 18), the rotational position of the short-circuit rotor (204).

2. Motor according to Claim 1, wherein the sensor (13A; 18) is arranged in the region of a face of the short-circuit rotor (204).

3. Motor according to Claim 1 or 2, wherein the temperature value (T) is suitable for characterizing the temperature of the short-circuit rotor (204).

4. Motor according to any one of the preceding claims, wherein the temperature evaluating device (CALC_T 44) is designed to feed the temperature value (T) to the regulator (20) for field-oriented regulation.

5. Motor according to any one of the preceding claims, with which a data memory (25, 320), in which motor system data which have been measured on the ASM (12) during operation at a specified temperature are stored, is associated.

6. Motor according to Claim 5, wherein the temperature evaluating device (CAC_T 44) is designed to generate a value (T) which characterizes the temperature (T_SM, T_S) in the motor (12), depending on the output signal of the sensor (14A; 18; 18') and the stored motor system data.

7. Motor according to any one of the preceding claims, wherein the temperature evaluating device (CALC_T 44) is designed to determine the temperature value (T) from the amplitude of the output signal (HALL, U, U1, U2) of the sensor (14A; 18).

8. Motor according to any one of the preceding claims, wherein between the sensor magnet (274) and the sensor (14A; 18), an isolator (122) is provided.

9. Motor according to any one of the preceding claims, wherein the sensor (14A) is a galvanomagnetic sensor.

10. Motor according to any one of the preceding claims, wherein the sensor (14A) is a Hall sensor.

11. Motor according to any one of the preceding claims, wherein the galvanomagnetic sensor (14A) is designed to generate an output signal (110) which depends on the amount of the magnetic flux density (B 108) which the sensor magnet (274) generates.

12. Motor according to Claim 11, wherein the amplitude of the output signal (110) depends on the amount of the magnetic flux density (B 108) which the sensor magnet (274) generates.

13. Motor according to any one of the preceding claims, wherein the galvanomagnetic sensor (14A) is designed to determine an output signal (HALL, U) which depends on the temperature (T_SM) of the sensor magnet (274).

14. Motor according to any one of the preceding claims, wherein between the sensor magnet (274) and the sensor (14A; 18), an isolator (122) is provided.

15. Motor according to any one of Claims 1 to 8, wherein the sensor (18, 18') is an MR sensor.

16. Motor according to any one of Claims 1 to 8 or 15, wherein the sensor (18, 18') is designed to generate an output signal (U1, U2), which depends on the direction of the magnetic flux density (B(phi)) which the sensor magnet (274) generates.

17. Motor according to Claim 15 or 16, wherein the sensor (18, 18') is designed to generate an output signal (U1, U2), the amplitude of which depends on the direction of the magnetic flux density (B(phi)) which the sensor magnet (274) generates.

18. Motor according to any one of Claims 15 to 17, wherein the sensor (18, 18') is designed to generate an output signal (U1, U2) which depends on the temperature of the rotor position sensor (18, 18').

19. Motor according to any one of Claims 15 to 18, wherein between the sensor magnet (274) and the sensor (18, 18'), an isolator (122), which makes good thermal transfer between the sensor magnet (274) and the sensor (18, 18') possible, is provided.

20. Motor according to any one of Claims 15 to 19, wherein the sensor (14A) is connected to the sensor housing (124) of the motor with heat insulation.

21. Motor according to any one of the preceding claims, with a temperature evaluating device, which is temperature of the short-circuit rotor (204) from the output signal of the sensor (14A), and to feed it to the regulator (FOR 20) for field-oriented regulation.

22. Motor according to Claim 21, with which a data memory (25), in which motor data which have been measured on the ASM (12) during operation at a specified temperature are stored, is associated, and wherein the temperature evaluating device (20) is designed to generate a value which characterizes the temperature of the short-circuit rotor (204) depending on the output signal of the sensor (14A) and the stored motor data.

23. Motor according to any one of the preceding claims, wherein a magnetic resistor (18, 18'), the output signal (MR) of which is used to supply information about the rotational position (phi) of the short-circuit rotor (204), is associated with the sensor magnet (274).

**Revendications**

1. Moteur (12) à commutation électronique, lequel présente :

   un stator (202) ;
   un rotor en court-circuit (204) ;
   un régulateur (20) pour la régulation orientée par champ de ce moteur (12) ;
   un aimant de capteur (274) qui est disposé en liaison thermoconductrice avec le rotor en court-circuit (204) ;
   un capteur (14A ; 18) disposé à une distance prédéfinie (d) de cet aimant de capteur (274) sur le stator (202), dont le signal de sortie (HALL) est une fonction de la densité de flux magnétique (B) générée par l'aimant de capteur (274) sur le capteur (14A ; 18) et donc de la température du rotor en court-circuit (204) ;
   un dispositif d'évaluation de température (CALC_T 44), lequel est conçu pour déterminer, en fonctionnement, une valeur de température (T) à partir du signal de sortie du capteur (14A ; 18), laquelle valeur de température est utilisée pour caractériser une température (T_SM, T_S) dans le moteur (12) qui représente un paramètre actuel pour la régulation orientée par champ ;
   et le régulateur (20) est conçu pour déterminer aussi la position de rotation du rotor en court-circuit (204) à partir du signal de sortie (HALL, U, U1, U2) du capteur (14A ; 18).

2. Moteur selon la revendication 1, dans lequel le capteur (13A ; 18) est disposé au voisinage d'une face frontale du rotor en court-circuit (204).

3. Moteur selon la revendication 1 ou 2, dans lequel la valeur de température (T) permet de caractériser la température du rotor en court-circuit (204).

4. Moteur selon une des revendications précédentes, dans lequel le dispositif d'évaluation de température (GALC_T 44) est conçu pour amener la valeur de température (T) au régulateur (20) pour la régulation orientée par champ.

5. Moteur selon une des revendications précédentes,
   auquel est associée une mémoire de données (25, 320) dans laquelle sont enregistrées des données du système de moteur qui ont été mesurée sur l'ASM (12) lors du fonctionnement à une température prédéfinie.

6. Moteur selon la revendication 5, dans lequel le dispositif d'évaluation de température (CALC_T 44) est conçu pour générer une valeur (T) qui caractérise la température (T_SM, T_S) dans le moteur (12) en fonction du signal de sortie du capteur (14A ; 18 ; 18') et des données du système de moteur enregistrées.

7. Moteur selon une des revendications précédentes, dans lequel le dispositif d'évaluation de température (CALC_T 44) est conçu pour déterminer la valeur de température (T) à partir de l'amplitude du signal de sortie (HALL, U, U1, U2) du capteur (14A ; 18).

8. Moteur selon une des revendications précédentes, dans lequel un élément de séparation (122) est prévu entre l'aimant de capteur (274) et le capteur (14A ; 18).

9. Moteur selon une des revendications précédentes, dans lequel le capteur (14A) est un capteur galvanomagnétique.

10. Moteur selon une des revendications précédentes, dans lequel le capteur (14A) est un capteur à effet Hall.

11. Moteur selon une des revendications précédentes, dans lequel le capteur galvanomagnétique (14A) est conçu pour générer un signal de sortie (110) qui dépend de la valeur de la densité de flux magnétique (B 108) produite par l'aimant de capteur (274).

**12.** Moteur selon la revendication 11, dans lequel l'amplitude du signal de sortie (110) dépend de la valeur de la densité de flux magnétique (B 108) produite par l'aimant de capteur (274).

**13.** Moteur selon une des revendications précédentes, dans lequel le capteur galvanomagnétique (14A) est conçu pour déterminer un signal de sortie (HALL, U) dépendant de la température (T_SM) de l'aimant de capteur (274).

**14.** Moteur selon une des revendications précédentes, dans lequel un élément de séparation (122) en matière plastique est prévu entre l'aimant de capteur (274) et le capteur (14A ; 18).

**15.** Moteur selon une des revendications 1 à 8, dans lequel le capteur (18, 18') est un capteur MR.

**16.** Moteur selon une des revendications 1 à 8 ou 15, dans lequel le capteur (18, 18') est conçu pour générer un signal de sortie (U1, U2) qui dépend de la direction de la densité de flux magnétique (B(phi)) produite par l'aimant de capteur (274).

**17.** Moteur selon la revendication 15 ou 16, dans lequel le capteur (18, 18') est conçu pour générer un signal de sortie (U1, U2) dont l'amplitude dépend de la direction de la densité de flux magnétique (B(phi)) produite par l'aimant de capteur (274).

**18.** Moteur selon une des revendications 15 à 17, dans lequel le capteur (18, 18') est conçu pour générer un signal de sortie (U1 , U2) dépendant de la température du capteur de position de rotor (18, 18').

**19.** Moteur selon une des revendications 15 à 18, dans lequel un élément de séparation (122) est prévu entre l'aimant de capteur (274) et le capteur (18, 18'), lequel permet une bonne transmission de chaleur entre l'aimant de capteur (274) et le capteur (18, 18').

**20.** Moteur selon une des revendications 15 à 19, dans lequel le capteur (14A) est relié de manière thermiquement isolante au boîtier de capteur (124) du moteur.

**21.** Moteur selon une des revendications précédentes, avec un dispositif d'évaluation de température, lequel est conçu pour générer à partir du signal de sortie du capteur (14A) une valeur qui caractérise la température du rotor en court-circuit (204) et amener celle-ci au régulateur (FOR 20) pour la régulation orientée par champ.

**22.** Moteur selon la revendication 21, auquel est associée une mémoire de données (25) dans laquelle sont enregistrées des données du moteur qui ont été mesurées sur l'ASM (12) lors du fonctionnement à une température prédéfinie, et dans lequel le dispositif d'évaluation de température (20) est conçu pour générer la valeur qui caractérise la température du rotor en court-circuit (204) en fonction du signal de sortie du capteur (14A) et des données du moteur enregistrées.

**23.** Moteur selon une des revendications précédentes, dans lequel une magnétorésistance (18, 18') est aussi associée à l'aimant de capteur (274), dont le signal de sortie (MR) sert à fournir une information sur la position de rotation (phi) du rotor en court-circuit (204).

200

12

124  206  214  123  202  ${}^{i}$R  210

208

122

14A,18

274

204

Fig. 1

Fig. 2

Fig. 3

270

HALL

SCL ←

SDA ←

U_Stand

$\underline{14}$

18

MR

14A

d

274

Rotor

$\underline{204}$

EP 1 992 927 B1

Fig. 4

EP 1 992 927 B1

15

$V_H$-B

Fig. 5

$V_H$-T

Fig. 6

Fig. 7

$U1 = f(T\_S)\sin(phi)$
$U2 = f(T\_S)\cos(phi)$

$B(phi, T\_SM)$

$r\_SM$

$$AMPL := \frac{MAX\_U1 - MIN\_U1}{2}$$

T:=g(AMPL, PAR)

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 10174276 A
- JP 2004222387 A
- US 4567419 A
- DE 3205460 A1
- JP 2005061709 A